Europäisches Patentamt

**European Patent Office**

**Office européen des brevets**

(11) Publication number: **0 129 867**
**A1**

(12) **EUROPEAN PATENT APPLICATION**

(21) Application number: **84107168.1**

(22) Date of filing: **22.06.84**

(51) Int. Cl.⁴: **G 02 F 1/133**
**G 09 F 9/35**

(30) Priority: **21.06.83 JP 111343/83**
**21.06.83 JP 111345/83**

(43) Date of publication of application:
**02.01.85 Bulletin 85/1**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Naemura, Shohei**
**c/o NEC Corporation 33-1, Shiba 5-chome**
**Minato-ku Tokyo(JP)**

(72) Inventor: **Tani, Chizuka**
**c/o NEC Corporation 33-1, Shiba 5-chome**
**Minato-ku Tokyo(JP)**

(72) Inventor: **Sakuma, Hiraku**
**c/o NEC Corporation 33-1, Shiba 5-chome**
**Minato-ku Tokyo(JP)**

(72) Inventor: **Nunomura, Keiji**
**c/o NEC Corporation 33-1, Shiba 5-chome**
**Minato-ku Tokyo(JP)**

(72) Inventor: **Saito, Takeshi**
**c/o NEC Corporation 33-1, Shiba 5-chome**
**Minato-ku Tokyo(JP)**

(72) Inventor: **Tanaka, Takanori**
**c/o NEC Corporation 33-1, Shiba 5-chome**
**Minato-ku Tokyo(JP)**

(74) Representative: **Vossius Vossius Tauchner Heunemann**
**Rauh**
**Siebertstrasse 4 P.O. Box 86 07 67**
**D-8000 München 86(DE)**

(54) **Multi-color flat display panel.**

(57) The multi-color flat display panel comprises electro-luminiscent layers (3, 4) for illuminating the whole display screen from behind; color filters (14, 15) of a plurality of colors for selectively transmitting in a spectral manner the lights emitted by the electroluminiscent layers; liquid crystal layers for selectively transmitting or intercepting electrolumiscent lights entering from or passing to the color filters; and switching elements (6 to 10) connected to the liquid crystal layers on a pixel-by-pixel basis. This flat display panel allows a vivid multicolor representation and has a large display capacity.

Fig. 1

Our Ref.: T 143 EP
Case:     P-8596

NEC CORPORATION
TOKYO, JAPAN

VOSSIUS · · · · TAUCHNER
·· · · · · RAUH
·· · · · · · ·
SIEBERTSTR 4, · · MÜNCHEN 50
TEL (089) 4 4075

**0129867**

2 2. Juni 1934

## Multi-Color Flat Display Panel

Background of the Invention

The present invention relates to a flat display panel capable of vivid representation in multiple colors and having a large display capacity.

There is a great demand for graphic and/or character display units, especially for use in office automation systems and various computer systems, and there further are pressing requirements on these display units for multi-color representation capability and large display capacities. To meet these requirements, cathode ray tubes (CRTs) are commonly used. However, CRTs have such disadvantages as large cubic measures, heavy weights and screen flickers, which invite eye strain on the part of their users, and accordingly there is an urgent call for the development of a new type flat display panel, free of these disadvantages.

To meet this call have been developed the plasma display panel (PDP), electroluminescent (EL) panel and liquid crystal display (LCD) panel, which, however, are still inadequate in performance, especially unsatisfactory in multi-color representation capability. Among these new types of flat display panel, what is considered the most likely to replace the CRT display is the LCD panel.

Expansion of the LCD's representation capacity is realized by laying a switching element over each display picture element (pixel). Switching elements used for this purpose include thin-film transistors (TFTs) of polycrystalline Si, monocrystalline Si, amorphous Si or Te. The methods of color representation include multi-coloring of the background plate or providing each pixel with a color filter. Thus, the liquid crystal (LC) layer functions as a light shutter in the twist nematic (TN) mode or black guest-host (GH) mode, so that the color of the background plate or of the color filter is seen at the pixel where the liquid crystal layer is on, or the pixel where it is off appears black. An example of this kind of LCD is reported on by S. Morozumi et al in their article entitled "B/W and Color LC Video Displays Addressed by Poly Si TFTs" in SID 83 Digest (1983), pp. 156-157.

However, this type LCD, if used in a reflective mode, is insufficient in brightness and accordingly unpractical, and has to be used in a transmissive mode. Whereas the LCD reported on by Morozumi and his associates is a transmissive version, they state nothing as to the type of back lighting. A fluorescent lamp is conventionally used for back lighting in an LCD, but this kind of lamp, even a flat one, is rather thick, and therefore ruins the important feature of the LCD as a thin display.

Moreover, in a display of a relatively large area, the fluorescent lamp has the additional disadvantage of being unable to always ensure uniform illumination.

There has been an attempt to use an electroluminescent (EL) light source, instead of the fluorescent lamp which has these disadvantages, in a monochrome LCD (Nikkei Electronics, Jan. 31, 1983, p. 67). However, no conventional method permitted the use of an EL light source for the illumination of a color LCD, because light from the EL, unlike that from the fluorescent lamp, cannot be made colorless. Even what is the closest to colorless light among the currently available, for instance that mentioned in the above-cited reference, is slightly yellow, and no such EL light source can give any shade of blue. Thus, the LCD, which is considered the foremost among the known alternatives to meet the demand for a flat color display having a large capacity, is still unsatisfactory, especially in terms of color representation capability.

Summary of the Invention

An object of the present invention, therefore, is to provide a flat display panel capable of vivid multi-color representation and having a large display capacity.

The multi-color flat display panel according to the invention is characterized in that it is provided with electroluminescent layers for illuminating the whole display screen from behind; color filters of a plurality of colors for selectively transmitting in a spectral manner the lights emitted by the electroluminescent layers; liquid crystal layers for selectively transmitting or intercepting electroluminescent lights entering from or passing to the color filters; and switching elements connected to the liquid crystal layers on a pixel-by-pixel basis.

Brief Description of the Drawings

FIG. 1 is a sectional view of a part of a liquid crystal panel, which is a preferred embodiment of the present invention;

FIG. 2 is a front view showing the arrangement of switching elements formed over the substrate 1 relating to the embodiment of the invention:

FIG. 3 is a front view of the a-b section of FIG. 1 and shows the arrangement of filters and pixel electrodes;

FIGS. 4a and 4b are graphs showing the emission spectra of the electroluminescent layer 3 and the electroluminescent layer 4, respectively, relating to the embodiment of the invention;

FIGS. 5a and 5b are graphs showing the transmission characteristics of the filters 14 and 15, respectively, relating to the embodiment of the invention; and

FIG. 6 is a front view showing an alternative arrangement of filters and pixel electrodes, which can be used in the embodiment of the invention.

Detailed Description of the Preferred Embodiments

Other features and advantages of the present invention will be more apparent from the detailed description hereunder taken in conjunction with the accompanying drawings.

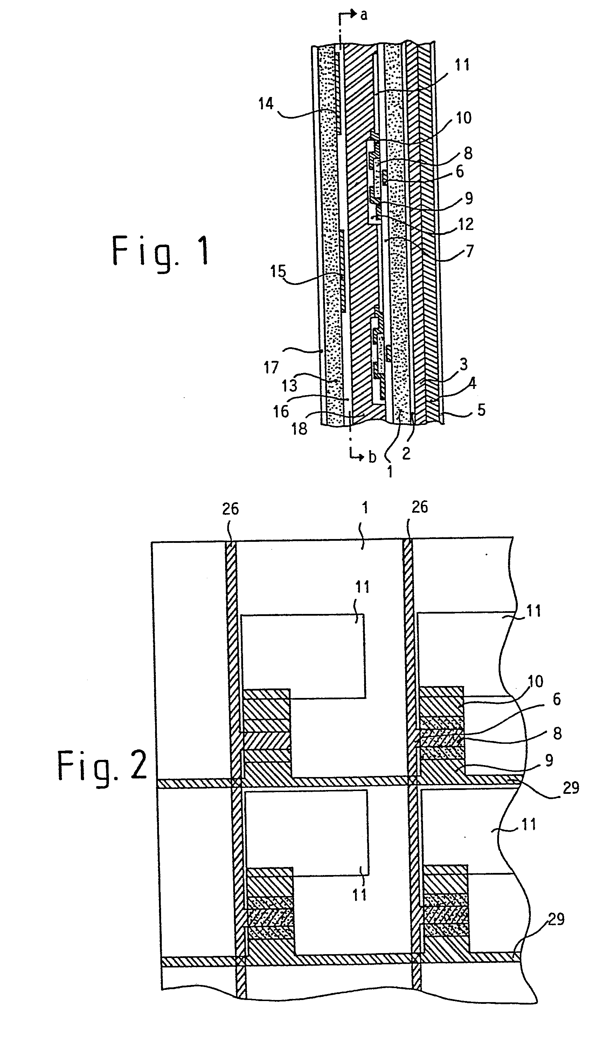

FIG. 1 is a sectional view of a part of a multi-color flat display, which is a preferred embodiment of the invention, wherein, behind a glass substrate 1 on one side, there are formed a transparent electrode 2, an electroluminescent layer 3 consisting of ZnS doped with $TbF_3$ emitting green electroluminescent light, another electroluminescent layer 4 comprising ZnS doped with $SmF_3$ emitting red electroluminescent light and another electrode 5 having a light-reflective face. Inside the glass substrate 1 are switching elements, each built into one or another pixel, of thin-film transistor (TFT) structure of amorphous Si. Each TFT consists of an Mo gate electrode 6, an $Si_3N_4$ insulating layer 7, an amorphous Si layer 8, an Mo source electrode 9 and an Mo drain electrode 10, and to the drain electrode 10 is connected an indium tin oxide (ITO) electrode 11. The TFT is covered with an $Si_3N_4$ protective film 12. The gate electrode and source electrode of the TFT are composed of a part each of the gate signal  electrode and of the source signal electrode, respectively, and driving electric signals from outside the panel are fed by the gate signal electrode and source signal electrode to the gate electrode and source electrode, respectively, to operate the TFT.

Next will be described how these electrodes are formed with reference to FIG. 2, which is a front view showing the matrix arrangement of the array of switching elements of TFT structure formed inside the glass substrate 1 and the signal electrodes in a part of the panel illustrated in FIG. 1.  In FIG. 2, reference numerals 26 represent gate signal electrodes and 29, source signal electrodes, a part of each constituting a gate electrode 6 or a source electrode 9, whichever is pertinent.  Numerals 8, 10 and 11 respectively refer to an amorphous Si, an Mo drain electrode and an ITO pixel electrode as in FIG. 1.

Referring again to FIG. 1, inside the other glass substrate 13 are alternately formed color filters 14 passing green light and color filters 15 passing red light in such positions as correspond to pixel electrodes, and all over them is formed an ITO common electrode 16. The color filters 14 and 15 are prepared by dyeing polyether sulfone resin with a mixture of Sumicaron E-FBL and Sumicaron E-4GL and Eastman Scarlet BG, respectively. To the outside of this glass substrate 13 is attached a polarizing film 17 for the purpose of improving the contrast of images. The multi-color flat display panel is fabricated by positioning opposite to each other the two glass substrates 1 and 13 of such structures with an approximately 10-micron gap in-between and filling the gap with a liquid crystal material prepared by adding a suitable quantity of chiral nematic liquid crystals CM15 (a product of Chisso Corp.) to mixed liquid crystals ZLI1841 (a product of E. Merck) containing black dichroic dyes. Although in practice the faces of the two glass substrates coming into contact with the liquid crystals undergoes usual parallel orientation treatment, this process is ignored in FIG. 1 for brevity's sake.

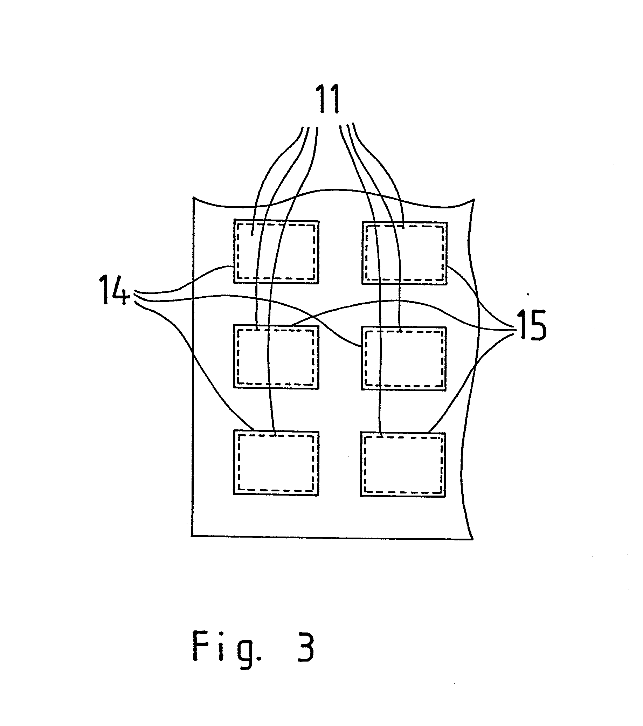

FIG. 3, illustrating the positional relationship between the split structure of color filters and pixels in the embodiment of FIG. 1, is a front view seen from the a-b position in FIG. 1. In FIG. 3, reference numerals 11 represent the same ITO pixel electrodes as in FIG. 1, each of which constitutes a display pixel. Further in FIG. 3, 14 and 15 refer to the same color filters as in FIG. 1, respectively passing green and red lights, and they are so positioned as to be in one-to-one correspondence with the display pixels 11.

In a panel of this structure, as D.C. voltage pulses of around 15 V are successively applied to a gate signal electrode 26, a TFT-structured switching element connected from a gate electrode 6 to the corresponding gate signal electrode 26 is kept "on" as long as the pulse voltage is applied, and the voltage of about 10 V impressed on a source signal electrode 29 causes the electric charge to shift from a source electrode 9, connected to the corresponding source signal electrode 29, by way of a drain electrode 10 to an ITO pixel electrode 11. Therefore, if the electric potentials of a pixel electrode 11 and the corresponding ITO common electrode 16 are set at the ground level (0 V), an electric field will be generated in the part of the liquid crystal layer sandwiched between the two electrodes 16 and 11, and most of the liquid crystal molecules in that part will be forcibly oriented in the direction of the electric field, i.e. a direction normal to the electrode faces. As a result, the significant absorption of light by the dichroic dyes will be eliminated, so that the liquid crystal layer on the pixel electrode of the pixel (selected pixel) whose switching element is "on" and on whose source electrode a voltage is applied will become almost transparent.

On the other hand, if the source signal electrode is maintained at 0 V, even though the switching element is "on", no electric field will be generated between the pixel electrode pertinent to that source signal electrode and the common electrode. In the parts of the liquid crystal layer which are either over the pixel electrode of such a pixel (unselected pixel) or facing no pixel electrode, the liquid crystal molecules are uniformly oriented in parallel with the electrode faces. As a result, in these regions, or elsewhere than the region of the selected pixel electrode, the absorption of light rays of all wavelengths by the black dichroic dyes causes the liquid crystal layer to pass virtually no light. This effect is reinforced by the utilization of linearly polarized light in only one direction by the use of the polarizing film 17.

Since gate signal electrodes are successively scanned, when the pulse voltage applied on the gate electrode is eliminated, the switching element is turned off, so that the voltage applied to the source signal electrode is not conveyed to the drain electrode and the shift of electric charge to the ITO pixel electrode is discontinued. However, because the electric charge, once stored in the selected pixel, is maintained for a duration determined by a CR time constant, the forced orientation of the liquid crystal molecules by the electric field, and consequently the transparent state of the pixel, will be retained until the scanning of gate signal electrodes recurs if the time constant value is sufficiently great. This is the effect of the TFT-structured switching elements, which makes even time-division driving in a line-at-a-time addressing scheme, as viewed from liquid crystals, similar to static driving, and accordingly permits ready realization of a large-capacity display where many electrodes have to be scanned.

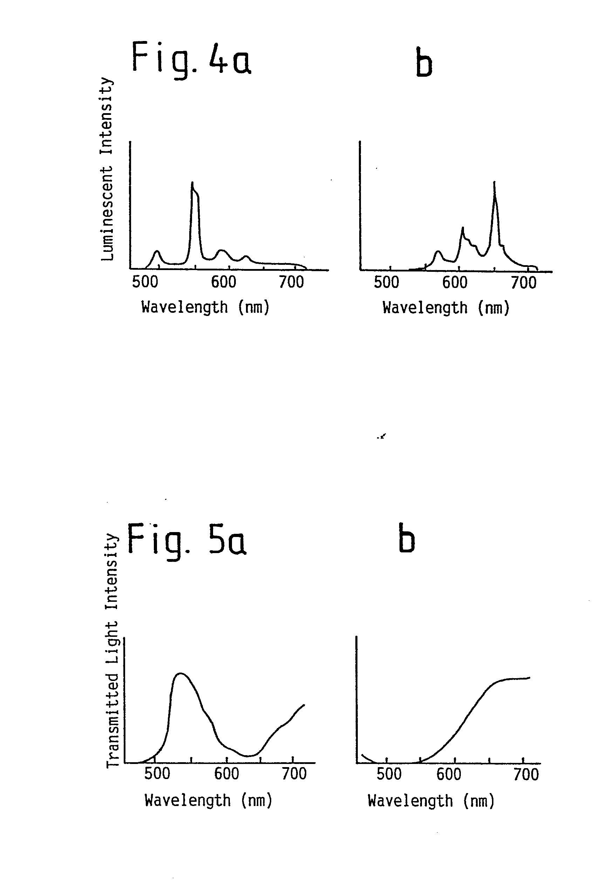

To describe the functioning of the electroluminescent layers, supplying an A.C. voltage between the transparent electrode 2 and the electrode 5 having a light-reflective face causes the first such layer 3 to emit green luminescent light having the spectrum of FIG. 4a and the second such layer 4 to emit red luminescent light having the spectrum of FIG. 4b. Therefore, these luminescent lights alone constitute a sum of the spectra of FIGS. 4a and 4b. (As regards a double-layer structured electroluminescence panel, there is known, for instance a report by R.E. Coovert et al., entitled "Feasibility of a Dual-Color ACTFEL Display" and published in SID 82 Digest, pp. 128-129.) This light of the synthesized spectrum, as seen from the spectra of FIGS. 4a and 4b, is far from being colorless and, as it is, can give no satisfactory color display, as described with reference to prior art.

The multi-color flat display panel according to the present invention uses color filters. The color filters 14 and 15 have the transmission spectra shown in FIGS. 5a and 5b, respectively. Thus, as the color filter 14 effectively passes the main wavelength of the green luminescent light emitted from the electroluminescent layer 3, if a pixel provided with a color filter 14 is selected, there is transmitted vivid green light having a very steep spectrum. Similarly, as the color filter 15 effectively passes the main wavelength of the red luminescent light emitted from the electroluminescent layer 4, if a pixel provided with a color filter 15 is selected, there is transmitted vivid red light having a very steep spectrum. Even the light passed by a color filter cannot give a completely separated spectrum, like the one shown in FIG. 5a or 5b, but light of wavelengths in the vicinity of 590 nm or above 660 nm is transmitted, though only slightly, by both color filters. Therefore, if light of wavelengths in one or more of these regions is emitted from the light source behind, separation by the color filters will become inadequate, resulting in deteriorated chroma of the display colors. In the light emitted from the electroluminescent layers of this embodiment, however, the components of wavelengths in these regions are negligibly small, and moreover the lights of 550 nm and 650 nm, the main wavelengths of the lights emitted from the electroluminescent layers, effectively pass the respectively corresponding color filters.

It is thus seen that the multi-color flat display panel according to the present invention, in which color filters are so structured as to spectrally validly and

- 12 -

0129867

effectively select lights emitted from electroluminescent layers, can give very vivid color images even if the illumination light emitted from the electroluminescent layers is not perfectly colorless. Moreover, obviously, the display can be built far thinner than one having a fluorescent lamp as light source for the illuminating purpose.

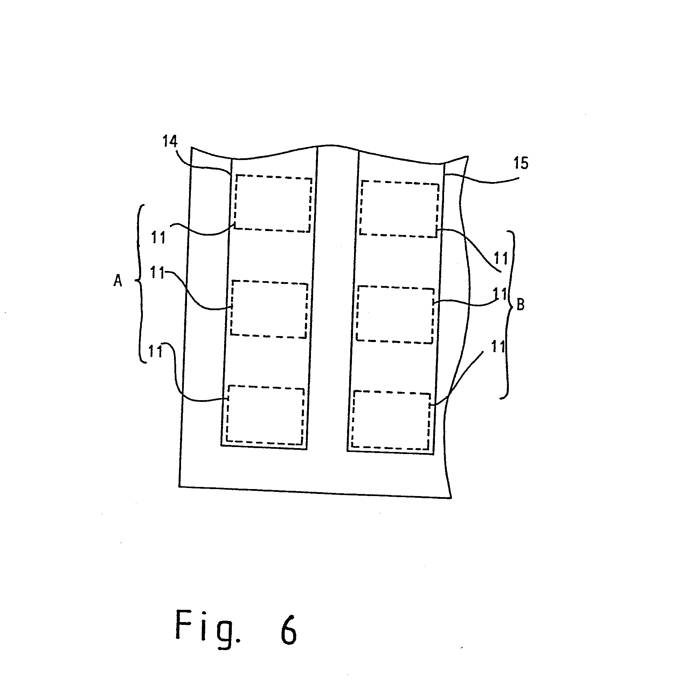

FIG. 6 is a front view of another color filter structure that can be used in the present invention, further illustrating the positional relationship between the color filters and display pixels. In FIG. 6, each of the reference numerals 11 represents, as in FIG. 1, an ITO pixel electrode, which constitutes one display pixel. In FIG. 6, display pixels on the left hand side make up one group, Group A, and ones on the right hand side form another, Group B. Further in the figure, 14 and 15 respectively refer to a color filter passing green light and another passing red light, like in FIG. 1, and the color filters 14 and 15 are so positioned as to respectively correspond to Groups A and B of display pixels on a one-to-one basis. This embodiment, especially if it is a very fine display panel having a large display capacity, does not require the arrangement of color filters in a finely dotted pattern, permits a high production yield and accordingly costs less. Of course, like the first preferred embodiment, it is capable of vivid color representation.

To add, though the color filters 14 and 15 are formed on the glass substrate 13 in the foregoing embodiments as shown in FIG. 1, they may as well be formed overlapped on the ITO pixel electrodes 11 on the other glass substrate 1.

Whereas the foregoing description, with a view to simplification, limits itself to embodiments having two electroluminescent layers, exactly the same effect can be realized with a single electroluminescent layer formed by mixing the two sets of electroluminescent materials to emit light having a spectrum combining the spectra of FIGS. 4a and 4b. Obviously, the display colors are not restricted to the ones used in these embodiments. Nor is their number limited to two.

Although the foregoing description refers to embodiments in which liquid crystal layers operate in a guest-host mode, the present invention is applicable to any operational mode in which light transmission and light interception can be effectively switched between each other according to the selection or non-selection of display pixel, such as a twist nematic mode. Further, though perhaps reduncant to state in particular, the switching elements for connecting each display pixels to liquid crystal layers are not restricted to thin-film transistors of amorphus Si which are used in this embodiment.

As hitherto described, the present invention can provide a flat display panel capable of vivid multi-color representation and having a large display capacity.

## CLAIM

A multi-color flat display panel comprising:

eletroluminiscent layers (3,4) for illuminating the whole display screen from behind;

color filters (14, 15) of a plurality of colors for selectively transmitting in a spectral manner the lights emitted by said electroluminiscent layers;

liquid crystal layers for selectively transmitting or intercepting electroluminiscent lights entering from or passing to said color filters (14, 15);

transparent pixel electrodes (11) arranged at prescribed intervals in connection with said liquid crystal layers;

and switching elements (6 to 10) for applying electric fields on said transparent pixel electrodes (11), wherein said color filters (14, 15) are so positioned as to correspond to said transparent pixel electrodes or groups of said transparent pixel electrodes on a one-to-one basis and at least one of color filters adjoining each of said color filters has a different selective characteristic.

orporation
ef: T 143 EP

0129867

Fig. 1

Fig. 2

Fig. 3

# Fig. 4a

b

Luminescent Intensity

Wavelength (nm)

500   600   700

Wavelength (nm)

500   600   700

# Fig. 5a

b

Transmitted Light Intensity

Wavelength (nm)

500   600   700

Wavelength (nm)

500   600   700

Fig. 6

# EUROPEAN SEARCH REPORT

## DOCUMENTS CONSIDERED TO BE RELEVANT

EP 84107168.1

| Category | Citation of document with indication, where appropriate, of relevant passages | Relevant to claim | CLASSIFICATION OF THE APPLICATION (Int. Cl. ³) |
|---|---|---|---|
| X | US - A - 3 840 695 (FISCHER) <br> * Fig. 1-3,6; Summary; column 2, line 60 - column 3, line 19 * | 1 | G 02 F 1/133 <br> G 09 F 9/35 |
| | -- | | |
| Y | GB - A - 1 509 643 (HUGHES) <br> * Column 1; fig. 4,5,5a,6,6a, 7 * | 1 | |
| | -- | | |
| Y | DE - B2 - 2 722 388 (EBAUCHES) <br> * Claims; fig. 1,2 * | 1 | |
| | ---- | | |

|  |
|---|
| **TECHNICAL FIELDS SEARCHED (Int. Cl. ³)** |
| G 02 F 1/00 <br> G 09 F 9/00 |

The present search report has been drawn up for all claims

| Place of search | Date of completion of the search | Examiner |
|---|---|---|
| VIENNA | 14-09-1984 | GRONAU |